(19) Europäisches Patentamt / European Patent Office / Office européen des brevets

(11) EP 2 594 614 B1

(12) # EUROPEAN PATENT SPECIFICATION

(45) Date of publication and mention of the grant of the patent:
**08.07.2015 Bulletin 2015/28**

(21) Application number: **11807065.5**

(22) Date of filing: **14.07.2011**

(51) Int Cl.:
***C09D 7/12*** (2006.01) ***C09D 5/00*** (2006.01)
***C08J 5/18*** (2006.01) ***G02B 1/11*** (2015.01)
***G02B 5/30*** (2006.01)

(86) International application number:
**PCT/KR2011/005197**

(87) International publication number:
**WO 2012/008780 (19.01.2012 Gazette 2012/03)**

(54) **ANTIREFLECTIVE AND ANTIGLARE COATING COMPOSITION, ANTIREFLECTIVE AND ANTIGLARE FILM, AND METHOD FOR PRODUCING SAME**

ANTIREFLEXIONS- UND BLENDSCHUTZ-BESCHICHTUNGSZUSAMMENSETZUNG, ANTIREFLEXIONS- UND BLENDSCHUTZFILM SOWIE HERSTELLUNGSVERFAHREN DAFÜR

COMPOSITION DE REVÊTEMENT ANTIRÉFLÉCHISSANT ET ANTIREFLET, FILM ANTIRÉFLÉCHISSANT ET ANTIREFLET, ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2011 KR 20110069791**
**14.07.2010 KR 20100068042**

(43) Date of publication of application:
**22.05.2013 Bulletin 2013/21**

(73) Proprietor: **LG Chem, Ltd.**
**Youngdungpo-gu**
**Seoul 150-721 (KR)**

(72) Inventors:
- **KANG, Joon Koo**
  **Daejeon 305-509 (KR)**
- **YUN, Han Sik**
  **Daejeon 305-804 (KR)**
- **CHANG, Yeongrae**
  **Daejeon 302-120 (KR)**
- **KIM, Boo Kyung**
  **Daejeon 302-120 (KR)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**WO-A1-2008/082168** **WO-A2-2009/064127**
**WO-A2-2009/064128** **KR-A- 20070 078 893**
**KR-A- 20080 063 107** **KR-A- 20080 101 801**
**KR-A- 20090 049 516** **KR-A- 20090 049 517**
**KR-A- 20090 049 519** **KR-A- 20090 049 558**

Remarks:
The file contains technical information submitted after the application was filed and not included in this specification

EP 2 594 614 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to an antireflective and antiglare coating composition, an antireflective and antiglare film manufactured from the same and a method for manufacturing the same. This application claims priority from Korean Patent Applications No. 10-2010-0068042 and KR102012007466A filed on July 14, 2010 and July 14, 2011 in the KIPO.

[Background Art]

A surface treatment of a surface of a display is performed in order to improve wear resistance of the display and improve an image contrast by decreasing reflection of an external light source. A decrease of reflection amount of the external light may be implemented by mainly two methods. First, diffused reflection is induced through a surface unevenness form, and second, there is a method for inducing extinction interference by a multilayered coating design.

In the related art, an anti-glare coating using a surface unevenness form is mainly applied thereto. However, in the case where the surface unevenness form is used, in a high resolution display, there are problems in that a resolution is decreased and clarity of an image is decreased by diffused reflection on a surface thereof. In order to solve these problems, in Japanese Unexamined Patent Application Publication No. H11(1999)-138712, a light diffusion film in which light is diffused in the film is manufactured by using organic particulates having a refractive index difference in respect to a binder. However, since there are problems in that luminance and contrast are decreased, an improvement is still required.

Japanese Unexamined Patent Application Publication No. H02(1990)-234101 and Japanese Unexamined Patent Application Publication No. H06(1994)-18704 disclose a method for performing extinction interference of reflection light through a multilayered coating design. This method may have an anti-reflection function without an image distortion. In this case, in order to perform extinction interference of the reflection light, a phase difference should exist between lights reflected in each layer, and amplitudes of waveforms between reflected lights should be identical with each other so that a reflection ratio is minimized in the extinction interference. For example, in respect to a single antireflective and antiglare coating layer provided on a substrate, in the case where an incident angle is 0°, the following Equation may be used.

[Equation 1]

$$n_o n_s = n_1^2$$

$$2n_1 d_1 = (m+1/2)\lambda \ (m=0, 1, 2, 3, ...)$$

($n_o$: refractive index of air, $n_s$: refractive index of a substrate, $n_1$: refractive index of a film, $d_1$: thickness of a film, and $\lambda$: wavelength of incident light)

In general, an anti-reflection effect is large as a refractive index of an anti-reflection coating layer is lower than a refractive index of the substrate, but in consideration of wear resistance of the coating layer, the refractive index of the anti-reflection coating layer may be 1.3 to 1.5 times of the refractive index of the substrate, and in this case, the reflection ratio is less than 3%. However, in the case where an anti-reflection coating layer is formed on a plastic film, since the wear resistance of the display cannot be satisfied, a hard coating layer having several μm (microns) is required under the anti-reflection coating layer. That is, in the case of the anti-reflection coating layer using the extinction interference, a hard coating layer for reinforcing wear resistance and one or more anti-reflection coating layers thereon are formed. Accordingly, the multilayered coating method has the anti-reflection function without an image distortion, but there is a problem in that a manufacturing cost is increased because of the multilayered coating.

Recently, a method for performing extinction interference of reflection light through a single layer coating design is being suggested. For example, Japanese Unexamined Patent Application Publication No. H07(1995)-168006 discloses a method for providing an anti-reflection effect by coating fine particulates dispersion solution on a substrate, exposing a spherical shape of the particulates to a surface so that a gradual difference in the refractive indexes between air and particles that is an interface occurs. However, it is difficult to implement this method through a general coating process because a shape and a size of the fine particulates should be constant and the particulates should be uniformly distributed on the substrate. In addition, since the spherical shape may be obtained on the surface when a binder is comprised in a predetermined amount or less, there is a very significant disadvantage in terms of wear resistance, and since the coating thickness is also thinner than a diameter of the particulates, it is very difficult to implement the wear resistance.

In addition, Japanese Unexamined Patent Application Publication No. 1995-325203 discloses a method for scattering external light through diffused reflection and decreasing a reflection amount of external light through extinction interference by simultaneously providing an anti-glare function and an anti-reflection function by laminating a low refractive layer on the anti-glare layer comprising the particulates. There are disadvantages in that raw material and process costs are increased by coating multilayer of the anti-glare layer and anti-reflection layer, and since there is a difficulty in uniform coating of the thin low refractive layer having the thickness of several hundred nanometers or less along the uneven surface formed on by the particulates, a defective ratio is increased.

Therefore, there is acutely required to a technology for providing an anti-reflection property to the surface of a display and improving wear resistance and weather resistance while a manufacturing process of the display is not complicated.

WO2009/064127A1 describes a coating composition for antireflection that includes a low refractive material having a refractive index of 1.2 to 1.45, a high refractive material having a refractive index of 1.55 to 2.2 and comprising high refractive fine particles and an organic substituent, in which the difference in the surface energy between two materials is 5 mN/m or more. Additionally, an antireflection film manufactured using the coating composition and a method of manufacturing the antireflection film are described.

WO2009/064128A2 discloses a coating composition for antireflection that includes a low refractive material having a refractive index of 1.2 to 1.45 and the high refractive resin having a refractive index of 1.46 to 2, in which the difference in the surface energy between two materials is 5 nN/m or more. Further, an antireflection film manufactured using the coating composition and a method of manufacturing the antireflection film are described.

KR20090049519A provides a coating composition for antireflection including a low refractive material having a refractive index of 1.2 to 1.45 and the high refractive resin having a refractive index of 1.46 to 2, wherein the difference in the surface energy between to materials is 5 mN/m or more. The low refractive material includes one or more selected from the group consisting of alkoxysilane reactant causing a sole-gel reaction, a urethane reactive group compound, an urea reactive group compound, and an esterification reactant.

WO20087082168A1 discloses a coating composition for antireflection that includes a low refraction-thermosetting resin having a refractive index of 1.2 to 1.45, a high refraction-UV curable resin having a refractive index of 1.46 to 2, and an UV absorber. Further, an antireflection film and a method of manufacturing the antireflection film are described.

KR20090049517A provides an antireflection coating composition comprising a low-refractive resin having a refractive index of 1.2 to 1.45, a high-refractive resin having a refractive index of 1.46 to 2, and a fluorine-based compound. The surface energy difference of the high-refractive resin and the low-refractive resin is 5 mN/m or greater. Additionally, a method for manufacturing the low-refractive film is described.

KR20090049558A discloses a coating composition for antireflection that includes a low refractive material having a refractive index of 1.2 to 1.45, and a high refractive resin having a refractive index of 1.46 to 2, in which the difference of the surface energy between two materials is 5 mN/m or more.

[Disclosure]

[Technical Problem]

The present invention has been made in an effort to provide an antireflective and antiglare coating composition that simultaneously implements an anti-reflection function and anti-glare function, and may obtain an effect of decreasing a manufacturing cost even though a coating layer is formed by a single coating process, an antireflective and antiglare film manufactured by using the same, and a method for manufacturing the same.

[Technical Solution]

The objects are achieved by an antireflective and antiglare coating composition according to claim 1, a method for manufacturing an antireflective and antiglare film according to claim 10, an antireflective and antiglare film according to claim 12, a polarizing plate according to claim 16 and a display device according to claim 17. Preferred embodiments are disclosed in the dependent claims.

An exemplary embodiment of the present invention provides an antireflective and antiglare coating composition comprising a low refractive substance having a refractive index of 1.2 to 1.45, a high refractive substance having a refractive index of 1.46 to 2, a fluorine-based compound, and particulates having an average particle diameter of 1 to 10 $\mu$m, in which a surface energy difference between the low refractive substance and the high refractive substance is 5 mN/m or more.

Another exemplary embodiment of the present invention provides a method for manufacturing an antireflective and antiglare film, comprising the steps of: a) preparing the antireflective and antiglare coating composition; b) forming a coating layer by applying the coating composition on a substrate; c) phase-separating the low refractive substance

and a high refractive substance by drying the coating layer; and d) curing the dried coating layer.

Yet another exemplary embodiment of the present invention provides an antireflective and antiglare film that comprises a single coating layer comprising a low refractive substance having a refractive index of 1.2 to 1.45, a high refractive substance having a refractive index of 1.46 to 2, a fluorine-based compound, and particulates having an average particle diameter of 1 to 10 μm, in which a surface energy difference between the low refractive substance and the high refractive substance is 5 mN/m or more, and the low refractive substance and high refractive substance have a concentration gradient in a thickness direction.

Still another exemplary embodiment of the present invention provides a polarizing plate comprising a) a polarizing film, and b) an antireflective and antiglare film according to an exemplary embodiment of the present invention provided on at least one side of the polarizing film.

Still yet another exemplary embodiment of the present invention provides a display device comprising the antireflective and antiglare film or the polarizing plate.

[Advantageous Effects]

According to exemplary embodiments of the present invention, there may be provided an antireflective and antiglare film having an antireflective and antiglare layer formed of a single coating layer by using a method for manufacturing the antireflective and antiglare coating composition and antireflective and antiglare film. The antireflective and antiglare film according to the exemplary embodiment of the present invention has excellent wear resistance, and low reflection and anti-glare functions, and can be manufactured by a single coating process, such that a manufacturing cost is decreased.

[Best Mode]

Hereinafter, the present invention will be described in detail.

The present invention relates to an antireflective and antiglare coating composition, an antireflective and antiglare film manufactured from the same and a method for manufacturing the same. More particularly, the present invention relates to an antireflective and antiglare coating composition that can implement an anti-glare function by particulates in a single coating layer that is coated through a single coating process and can implement an anti-reflection function by promoting a phase separation between internal composition components and has excellent weather resistance and wear resistance, an antireflective and antiglare film manufactured from the same and a method for manufacturing the same.

An antireflective and antiglare coating composition according to the exemplary embodiment of the present invention comprises a low refractive substance having a refractive index of 1.2 to 1.45, a high refractive substance having a refractive index of 1.46 to 2, a fluorine-based compound, and particulates having an average particle diameter of 1 to 10 μm, in which a surface energy difference between the low refractive substance and the high refractive substance is 5 mN/m or more.

In the exemplary embodiment of the present invention, surface energy means surface energy measured in a cured material generated when the corresponding material is cured.

The low refractive substance slowly moves to an upper part of the coating layer by a surface energy difference to the high refractive substance after the coating. In order to maximally use the phase separation and fix a position in drying and UV-irradiation steps, the low refractive substance may have fluidity at normal temperature and it is possible to implement both a heat-curable type that can be cured by a temperature and a UV-curable type that can be cured by UV. In addition, in the low refractive substance, surface energy is 25 mN/m or less and more preferably, 5 to 25 mN/m.

The material of the low refractive heat-curable resin is a heat-curable resin having a refractive index of 1.2 to 1.45, and for example, there are an alkoxysilane reactant, an urethane reactive group compound, an urea reactive group compound, and an esterification reactant that can be sol-gel reacted.

The alkoxysilane reactant means a reactive oligomer manufactured by performing hydrolysis and condensation reactions of alkoxysilane, fluorine-based alkoxysilane, and silane-based organic substituent by the sol-gel reaction under the condition of water and a catalyst. In this case, an average molecular weight of the reactive oligomer may be 1,000 to 200,000 when polystyrene is measured by GPC as a standard substance. The alkoxysilane reactant manufactured as described above performs a condensation reaction under a temperature condition of normal temperature or more after the coating, thus forming a net having a crosslinking structure.

The alkoxysilane may provide a predetermined level of strength to an outermost coating thin film. In detail, as the alkoxysilane component, tetraalkoxysilanes or trialkoxysilanes may be used, and one or more substance selected from the group consisting of tetramethoxysilane, tetraethoxysilane, tetraisopropoxysilane, methyl trimethoxysilane, methyltriethoxysilane, glycidoxypropyl trimethoxysilane, and glycidoxypropyl triethoxysilane may be used.

The content of alkoxy silane that is a basic monomer in the alkoxysilane reactant may be 5 to 50 parts by weight

on the basis of 100 parts by weight of the alkoxysilane reactant. In the case where the content is less than 5 parts by weight, wear resistance is not sufficiently excellent, and in the case where the content is more than 50 parts by weight, it is difficult to implement low refraction of the alkoxysilane reactant and a phase separation in respects to the high refractive substance.

The fluorine-based alkoxysilane decreases a refractive index and surface tension of the coating thin film, thus easily implement the phase separation in respects to the high refractive substance. As the fluorine-based alkoxysilane, a low refractive material having the low refractive index of 1.3 to 1.4 and low surface tension of 10 to 15 mN/m may be used. As the fluorine-based alkoxysilane, one or more substance selected from the group consisting of tridecafluorooctyltriethoxysilane, heptadecafluorodecyltrimethoxysilane, and heptadecafluorodecyltriisopropoxysilane may be used.

The alkoxysilane reactant has a refractive index in the range of 1.2 to 1.45, and in order to easily introduce the phase separation in respects to the high refractive substance, the content of the fluorine-based alkoxysilane may be 10 to 70 parts by weight on the basis of 100 parts by weight of the alkoxysilane reactant. In the case where the content is less than 10 parts by weight, it is difficult to implement low refraction and the phase separation in respect to the high refractive UV-curable resin, and in the case where the content is more than 70 parts by weight, it is difficult to ensure stability of liquid and scratch resistance.

The silane-based organic substituent may chemically be bonded to alkoxysilane, be reacted with the high refractive substance to form a double bond so that compatibility between the low refractive material and the high refractive material is increased, and after the phase separation, improve adherence at an interface between alkoxysilane and high refractive substance. Accordingly, if a compound acts as described above, the compound may be used without a limitation. As the silane-based organic substituent, one or more substance selected from the group consisting of vinyl trimethoxy silane, vinyl tri(beta-methoxyethoxy)silane, vinyl triethoxy silane, vinyl tri-n-propoxy silane, vinyl tri-n-pentoxy silane, vinylmethyl dimethoxy silane, diphenyl ethoxy vinylsilane, vinyl triisopropoxy silane, divinyl di(beta-methoxyethoxy)silane, divinyl dimethoxy silane, divinyl diethoxy silane, divinyl di-n-propoxy silane, divinyl di(isopropoxy) silane, divinyl di-n-pentoxy silane, 3-acryloxypropyl trimethoxy silane, 3-methacryloxypropyl trimethoxy silane, gamma-methacryloxypropyl methyl diethoxy silane, and gamma-methacryloxypropyl methyl diethoxysilane may be used.

In order to maintain compatibility and stability in a state where the alkoxysilane reactant is a coating solution, the content of the silane-based organic substituent may be 0 to 50 parts by weight on the basis of 100 parts by weight of the alkoxysilane reactant. When the content is more than 50 parts by weight, it is difficult to implement low refraction and phase separation in respect to the high refractive substance. In addition, in the case where the silane-based organic substituent is not added, compatibility of the low refractive substance to the high refractive substance is poor, such that the coating solution may not be uniformly mixed.

The alkoxysilane reactant may be manufactured through a sol-gel reaction. The sol-gel reaction may use a method that is generally used in the art to which the exemplary embodiment of the present invention belongs. The sol-gel reaction may be performed by reacting composition components comprising alkoxysilane, fluorine-based alkoxysilane, silane-based organic substituent, catalyst, water, and organic solvent at a reaction temperature of 0 to 150°C for 1 to 70 hours.

The catalyst that is used in the sol-gel reaction is a component that is required in order to control a sol-gel reaction time. As the catalyst, acids such as nitric acid, hydrochloric acid, and acetic acid are preferably used, and it is more preferable that hydrochloride, nitrate, sulfate, and acetate forms in conjunction with salts of zirconium and indium are used. In this case, the content of the catalyst may be 0.1 to 10 parts by weight on the basis of 100 parts by weight of the alkoxysilane reactant.

The water that is used in the sol-gel reaction is a component that is required for hydrolysis and condensation reactions. The content of the water may be 5 to 50 parts by weight on the basis of 100 parts by weight of the alkoxysilane reactant.

The organic solvent used in the sol-gel reaction is a component for appropriately controlling a molecular weight of the hydrolyzed and condensed material. The organic solvent may be alcohols, cellosolves®, ketones or two or more mixture solvents selected therefrom. In this case, the content of the organic solvent may be 0.1 to 50 parts by weight on the basis of 100 parts by weight of the alkoxysilane reactant.

Meanwhile, the urethane reaction group compound may be manufactured by reacting alcohol and isocyanate compound under the metal catalyst. A net structure having the urethane reaction group may be formed by leaving the composition in which multifunctional alcohol and multifunctional isocyanate having two or more functional groups and metal catalyst are mixed with each other at a temperature of normal temperature or more. In this case, a fluorine group may be introduced into alcohol or isocyanate in order to introduce low refractive characteristic implementation and phase separation in respect to the high refractive substance.

As examples of multifunctional alcohol comprising the fluorine, there are 1H,1H,4H,4H-perfluoro-1,4-butanediol, 1H,1H,5H,5H-perfluoro-1,5-pentanediol, 1H,1H,6H,6H-perfluoro-1,6-hexanediol,1H,1H,8H,8H-perfluoro-1,8-octanediol, 1H,1H,9H,9H-perfluoro-1,9-nonanediol, 1H,1H,10H,10H-perfluoro-1,10-decanediol, 1H,1H,12H,12H-perfluoro-1,12-dodecanediol, fluorinated triethylene glycol, and fluorinatedtetraethylene glycol.

As the isocyanate component that is used in manufacturing of the urethane reaction group compound, aliphatic isocyanate, alicyclic isocyanate, aromatic isocyanate, and heterocyclic isocyanate may be used. In detail, diisocyanates such as hexamethylene diisocyanate, 1,3,3-trimethyl hexamethylene diisocyanate, isophorone diisocyanate, toluene-2,6-diisocyanate, and 4,4'-dicyclohexane diisocyanate or three functional or more isocyanates, for example, DN950 and DN980 that are a trademark and manufactured by DIC, Co., Ltd. may be used.

In the exemplary embodiment of the present invention, a catalyst may be used in manufacturing of the urethane reaction group compound, and Lewis acid or Lewis base may be used as the catalyst. As detailed examples of the catalyst, there are tin octylate, dibutyltin diacetate, dibutyltin dilaurate, dibutyltin mercaptide, dibutyltin dimaleate, dimethyltin hydroxide, and triethylamine.

The content of isocyanate and multifunctional alcohol used in manufacturing of the urethane reaction group compound is determined so that a molar ratio (NCO/OH) of a NCO group and a OH group that are a functional group is preferably 0.5 to 2, and more preferably, 0.75 to 1.1. If the molar ratio of the functional group is less than 0.5 or more than 2, since the unreacted functional group is increased, there may be a problem in that strength of the film is decreased.

The urea reaction group compound may be manufactured by a reaction of amines and isocyanates. As isocyanates, the same components as the components that can be used in manufacturing of the urethane reactant may be used, and as amines, two functional or more amines of perfluoros may be used.

In the exemplary embodiment of the present invention, a catalyst may be used in manufacturing of the urea reaction group compound, if necessary, and Lewis acid or Lewis base may be used as the catalyst. As detailed examples of the catalyst, there are tin octylate, dibutyltin diacetate, dibutyltin dilaurate, dibutyltin mercaptide, dibutyltin dimaleate, dimethyltin hydroxide, and triethylamine.

The esterification reactant may be manufactured through dehydration and condensation reactions of acid and alcohol. A film having a crosslinked structure may be formed by mixing the esterification reactant with the coating solution. As the acid, two functional or more acids having fluorine may be used, and as examples thereof, there are perfluorosuccinic acid, perfluoroglutaric acid, perfluoroadipic acid, perfluorosuberic acid, perfluoroazelaic acid, perfluorosebacic acid, and perfluorolauric acid. As the alcohol, multifunctional alcohol may be used, and as examples of multifunctional alcohol, there are 1,4-butanediol, 1,2-butanediol, 1,5-pentanediol, 2,4-pentanediol, 1,4-cyclohexanediol, 1,6-hexanediol, 2,5-hexanediol, 2,4-heptanediol, pentaerythritol, and trimethyrolpropane. An acid catalyst such as a sulfuric acid or alkoxy titan such as tetrabutoxy titan may be used in the esterification reaction.

In the exemplary embodiment of the present invention, as the low refractive UV-curable resin is an acryl-based resin may be used, and it is preferable that a photoinitiator and solvent are used with the resin together.

The content of the acrylate-based resin may be 10 to 80 parts by weight on the basis of 100 parts by weight of the total content of the acrylate-based resin, photoinitiator and solvent. In the case where the content is less than 10 parts by weight, scratch resistance and wear resistance of the coating film are decreased, and in the case where the content is more than 80 parts by weight, since the viscosity of the coating composition is increased, there is a problem in that a planarization degree and a coating property of the coating film become poor.

As the acrylate-based resin, there are acrylate monomer, urethane acrylate oligomer, epoxy acrylate oligomer, and ester acrylate oligomer. As detailed examples thereof, there are dipentaerythritolhexaacrylate, pentaerythritol tri/tetra acrylate, trimethylenepropanetriacrylate, and ethyleneglycoldiacrylate, and they may be used alone or in a combination of two or more kinds.

In order to decrease the refractive index of the UV-curable resin, a fluorine-based acrylate may be used. As the fluorine-based acrylate, one or more compounds that are selected from the group consisting of the compounds of the following Formulas 1 to 5 may be used, and these compounds may further have a $C_1$-$C_6$ straight-chained or branched-chained hydrocarbon group as a substituent group.

[Formula 1]

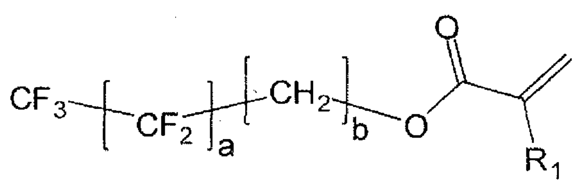

wherein $R_1$ is each -H or a $C_1$-$C_6$ straight-chained or branched-chained hydrocarbon group, a is an integer of 0 to 4, and b is an integer of 1 to 3. The $C_1$-$C_6$ hydrocarbon group may be a methyl group ($-CH_3$).

[Formula 2]

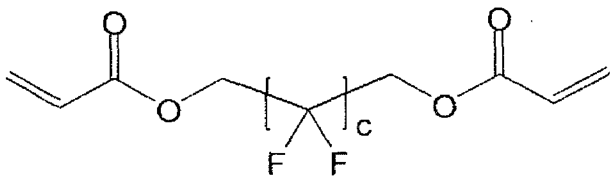

wherein c is an integer of 1 to 10.

[Formula 3]

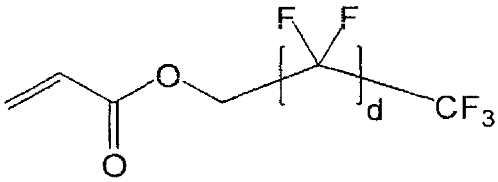

wherein d is an integer of 1 to 9.

[Formula 4]

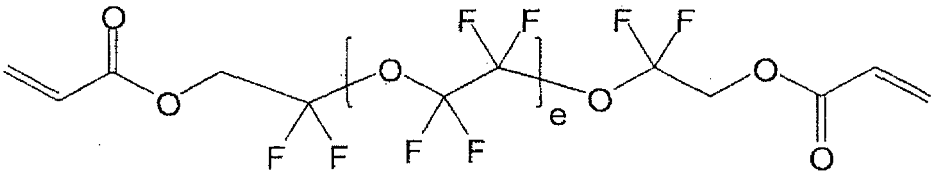

wherein e is an integer of 1 to 5.

[Formula 5]

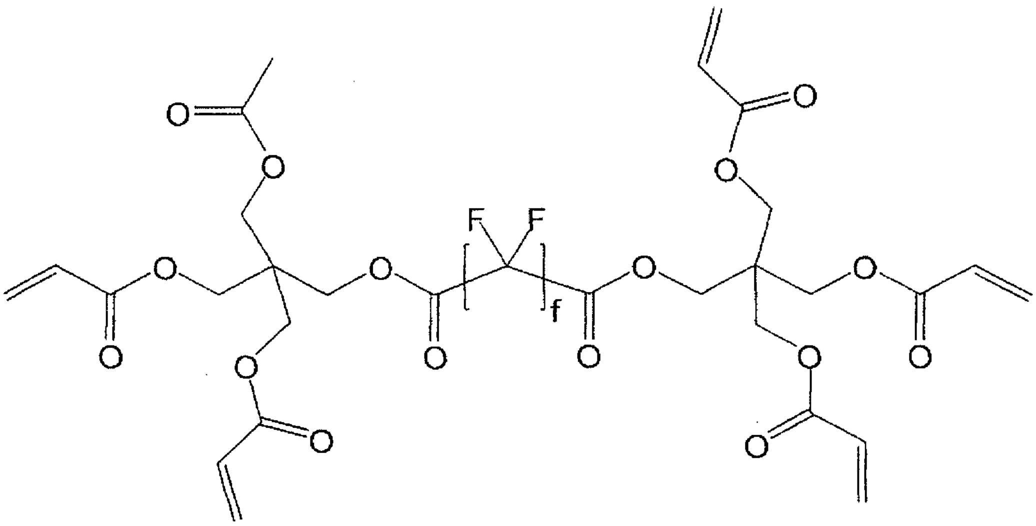

wherein f is an integer of 4 to 10.

The content of fluorine-based acrylate may be 10 to 80 parts by weight on the basis of 100 parts by weight of the total content of the acrylate-based resin, photoinitiator and solvent. In the case where the content is less than 10

parts by weight, it is difficult to obtain a low refractive index of 1.2 to 1.45, and in the case where the content is more than 80 parts by weight, there is a problem in that a planarization degree and a coating property of the coating film become poor.

As the photoinitiator, a compound that can be decomposed by UV may be used. As examples thereof, there are 1-hydroxy cyclohexylphenyl ketone, benzyl dimethyl ketal, hydroxydimethylaceto phenone, benzoin, benzoin methyl ether, benzoin ethyl ether, benzoin isopropyl ether, and benzoin butyl ether.

The photoinitiator may be comprised in the content of 1 to 20 parts by weight on the basis of 100 parts by weight of the total content of the acrylate-based resin, photoinitiator and solvent, in the case where the content is less than 1 parts by weight, there is a problem in that uncuring occurs, and in the case where the content is more than 20 parts by weight, there is a problem in that scratch resistance and wear resistance of the coating film become poor.

As the solvent, alcohols, acetates, ketones, cellosolves®, imides or aromatic solvents may be used. In detail, methanol, ethanol, isopropyl alcohol, butanol, 2-methoxy ethanol, 2-ethoxy ethanol, 2-butoxy ethanol, 2-isopropoxy ethanol, methyl acetate, ethyl acetate, butyl acetate, methyl ethyl ketone, methyl isobutyl ketone, cyclohexane, cyclohexanone, toluene, xylene, or benzene may be used.

The solvent may be comprised in the content of 10 to 90 parts by weight on the basis of 100 parts by weight of the total content of the acrylate-based resin, photoinitiator and solvent. In the case where the content is less than 10 parts by weight, since the viscosity of the coating composition is increased, compatibility with the high refractive substance is decreased, and a planarization degree of the coating film becomes poor, and in the case where the content is more than 90 parts by weight, there is a problem in that scratch resistance and wear resistance of the coating film become poor.

The high refractive substance is a resin having a refractive index of 1.45 to 2, and may be both a heat-curable resin and a UV-curable resin, and in curing, the surface energy of the cured substance is different from the surface energy of the low refractive substance in curing by 5 mN/m or more, and may be larger than the surface energy of the low refractive substance in curing by 5 mN/m or more.

The high refractive substance and low refractive substance may be combined in the same curing form, that is, a high refractive heat-curable resin and a low refractive heat-curable resin may be used together, and the high refractive UV-curable resin and the low refractive UV-curable resin may be used together. The low refractive heat-curable resin and high refractive heat-curable resin may be used together.

As the high refractive heat-curable resin, there are alkoxysilane reactant, urethane reaction group compound, urea reaction group compound, and esterification reactant that can perform a sol-gel reaction.

The definition and the kind of the alkoxysilane reactant are the same as those of the above low refractive heat-curable resin.

Meanwhile, in the high refractive heat-curable resin, the content of alkoxysilane that is a basic monomer in the alkoxysilane reactant may be 20 to 90 parts by weight on the basis of 100 parts by weight of the alkoxysilane reactant. In the case where the content is less than 20 parts by weight, wear resistance is poor, and in the case where the content is more than 90 parts by weight, it is difficult to implement high refraction of the alkoxysilane reactant.

In order to obtain the refractive index in the alkoxysilane reactant, as alkoxy silane, one or more high refractive alkoxy silane selected from the group comprising a substituent group such as sulfur, chlorine, and metal, or aromatic group such as phenyltrimethoxysilane, phenyltriethoxysilane, diphenyldiethoxysilane, and diphenyldimethoxysilane may be used.

The content of high refractive alkoxysilane may be 10 to 80 parts by weight on the basis of 100 parts by weight of the alkoxysilane reactant. In the case where the content is less than 10 parts by weight, it is difficult to implement the high refractive index, and in the case where the content is more than 80 parts by weight, it is difficult to ensure wear resistance.

The definition and the kind of the silane-based organic substituent are the same as those of the above-described low refractive heat-curable resin.

In order to maintain compatibility and stability in a state where the alkoxysilane reactant is a coating solution, the content of the silane-based organic substituent may be 10 to 80 parts by weight on the basis of 100 parts by weight of the alkoxysilane reactant. In the case where the content is less than 10 parts by weight, it is difficult to sufficiently provide compatibility with the low refractive UV-curable resin, and in the case where the content is more than 80 parts by weight, it is difficult to implement film strength and scratch resistance.

The alkoxysilane reactant may be manufactured through a sol-gel reaction. The sol-gel reaction may use a method that is generally used in the art to which the exemplary embodiment of the present invention belongs. The sol-gel reaction may be performed by, for example, reacting compositions comprising alkoxysilane, silane-based organic substituent, catalyst, water, and organic solvent at a reaction temperature of 0 to 150°C for 1 to 100 hours.

Meanwhile, the definition, the kind and the content of the catalyst and the water used in the sol-gel reaction are those of the above-described low refractive heat-curable resin.

The organic solvent used in the sol-gel reaction is a component for appropriately controlling a molecular weight of the hydrolyzed and condensed material. The organic solvent may be alcohols, cellosolves®, ketones or two or more

mixture solvents selected therefrom. In this case, the content of the organic solvent may be 0.1 to 80 parts by weight on the basis of 100 parts by weight of the alkoxysilane reactant.

Meanwhile, the urethane reaction group compound may be manufactured by reacting alcohol and isocyanate compound under the metal catalyst, like in the low refractive heat-curable resin. A net structure having the urethane reaction group may be formed by leaving the composition in which multifunctional alcohol and multifunctional isocyanate having two or more functional groups and metal catalyst are comprised at a temperature of normal temperature or more.

As the alcohol component used in manufacturing of the urethane reaction group compound, low molecular weight polyol (for example, polyol having the weight average molecular weight of 400, in detail, aliphatic diol such as C2-C10 aliphatic diol, triol and multivalent alcohol), polyester polyol, polyether polyol, amide-containing polyol, polyacryl polyol, epoxy polyol, multivalent polyvinyl alcohol, urethane polyol and a mixture of these polyols are comprised.

The isocyanate component used in manufacturing of the urethane reaction group compound is the same as that of the low refractive heat-curable resin.

The kind of the catalyst used in manufacturing of the urethane reaction group compound is the same as that of the low refractive heat-curable resin.

The contents of isocyanate component and multifunctional alcohol used in manufacturing of the urethane reaction group compound are the same as that of the low refractive heat-curable resin.

The manufacturing method and component substance of the urea reaction group compound, and catalyst are the same as those of the above low refractive heat-curable resin.

The esterification reactant may be manufactured through dehydration and condensation reactions of acid and alcohol. A film having a crosslinked structure may be formed by mixing the esterification reactant with the coating solution. As the acid, two functional or more acids may be used, and as examples of two functional or more acids, there are succinic acid, glutaric acid, adipic acid, suberic acid, azelaic acid, sebacic acid, and lauric acid. As the alcohol, multifunctional alcohol may be used, and in detail, there are 1,4-butanediol, 1,2-butanediol, 1,5-pentanediol, 2,4-pentanediol, 1,4-cyclohexanediol, 1,6-hexanediol, 2,5-hexanediol, 2,4-heptanediol, pentaerithritol, and trimethylolpropane. An acid catalyst such as a sulfuric acid or alkoxy titan such as tetrabutoxy titan may be used in the esterification reaction.

The material of the high refractive UV-curable resin material may comprise an acrylate-based resin, and a photoinitiator and solvent.

As the acrylate-based resin, there are acrylate monomer, urethane acrylate oligomer, epoxy acrylate oligomer, and ester acrylate oligomer, and in order to obtain the high refractive index, the substituent group such as sulfur, chlorine, and metal or aromatics may be comprised. As examples thereof, there are dipentaerythritolhexaacrylate, pentaerythritol tri/tetra acrylate, trimethylenepropanetriacrylate, ethyleneglycoldiacrylate, 9,9-bis(4-(2-acryloxyethoxyphenyl)fluorine (refractive index 1.62), bis(4-methacryloxythiophenyl)sulfide (refractive index 1.689), and bis(4-vinylthiophenyl)sulfide (refractive index 1.695), and they may be used alone or in a combination of two or more kinds.

The content of the acrylate-based resin is the same as that of the above low refractive heat-curable resin.

The definition, the kind and content of the photoinitiator are the same as those of the above low refractive heat-curable resin.

The kind of the solvent is the same as that of the above low refractive heat-curable resin.

The content of the solvent may be 10 to 90 parts by weight on the basis of 100 parts by weight of the high refractive substance. In the case where the content is less than 10 parts by weight, since the viscosity of the coating solution is increased, it is difficult to implement phase separation with the low refractive substance, and there is a problem in that a planarization degree of the coating film becomes poor, and in the case where the content is more than 90 parts by weight, there are problems in that scratch resistance and wear resistance of the coating film become poor and the viscosity of the coating solution becomes excessively low so as not to transfer the solution to a coating device and a substrate.

The high refractive substance may comprise a surfactant. As the surfactant, a levelling agent or a wetting agent may be used, and in particular, a fluorine-based or polysiloxane-based compound may be used.

The content of the surfactant may be maximally 5 parts by weight on the basis of 100 parts by weight of the high refractive substance. In the case where the content is more than 5 parts by weight, there are problems in that a phase separation effect with the low refractive substance is decreased, and an attachment property to substrate, scratch resistance and wear resistance of the coating film become poor.

The refractive index difference between the above low refractive substance and high refractive substance may be 0.01 or more after the drying and curing, and in this case, it is possible to obtain an anti-reflection effect by functionally forming a GRIN (gradient refractive index) structure formed of two layers or more in the single coating layer. In this case, when the low refractive substance is cured, the surface energy is 25 mN/m or less, and the surface energy difference between the low refractive substance and the high refractive substance is 5 mN/m or more, the phase separation is efficiently performed.

The fluorine-based compound according to the exemplary embodiment of the present invention promotes the phase separation between the high refractive substance and low refractive substance. The refractive index of the fluorine-based compound is 1.5 or less, a molecular weight is smaller than a molecular weight of the low refractive substance, and surface energy may be between surface energies of the high refractive substance and low refractive substance.

As the fluorine-based compound, one or more substance selected from the group consisting of all fluorine-based compounds used as the low refractive heat-curable resin material, such as fluorine-based alkoxysilane, fluorine-based alcohol, fluorine-based isocyanate, fluorine-based amines, and two functional or more acids comprising fluorine, one or more fluorine-based acrylate represented by Formulas 1 to 5 and further having a C1-C6 straight-chained or branched-chained hydrocarbon group, a leveling agent comprising a fluorine component, various fluorine-based additives such as a dispersing agent, a surface reforming agent, a wetting agent, a defoaming agent, and a compatibility agent, and a fluorine-based solvent may be used.

The particulates having the average particle diameter of 1 to 10 μm form unevenness on a surface of the antireflective and antiglare coating film, thus inducing diffused reflection, thereby providing an anti-glare function. As the particulates having the average particle diameter of 1 to 10 μm, fixed-type or amorphous particulates of organic, inorganic, or organic and inorganic complexes may be used.

In the case where the average particle diameter of the particulates is less than 1 μm, since unevenness is not formed on the surface thereof, it is impossible to induce diffused reflection of external light, and in the case where the diameter is more than 10 μm, since the unevenness becomes large, an image resolution may be decreased. It is more preferable that the average particle diameter of the particulates is 1.5 to 5 μm.

The known anti-reflection film may comprise nanoparticulates, but the average particle diameter of the nanoparticulates is 10 to 100 nm, such that low reflection of the film is improved. However, the exemplary embodiment of the present invention is characterized in that the particulates having the average particle diameter of 1 to 10 μm are comprised. By comprising the particulates having the average particle diameter of 1 to 10 μm, unevenness may be formed by the particulates on the surface of the antireflective and antiglare film according to the exemplary embodiment of the present invention, such that an anti-glare characteristic of the film may be largely improved.

The organic particulates may use a single substance selected from polystyrene, polymethylmethacrylate, polymethylacrylate, polyacrylate, polyacrylate-co-styrene, polymethylacrylate-co-styrene, polymethylmethacrylate-co-styrene, polycarbonate, polyvinyl chloride, polybutyleneterephthalate, polyethyleneterephthalate, polyamides, polyimides, polysulfone, polyphenylene oxide, polyacetal, epoxy resin, phenol resin, silicone resin, melamine resin, benzoguamine, polydivinylbenzene, polydivinylbenzene-co-styrene, polydivinylbenzene-co-acrylate, polydiallylphthalate and triallylisocyanurate polymer, or two or more copolymers thereof.

The inorganic particulates may be a single substance selected from silica, titanium oxide, zirconium oxide, indium oxide, aluminum oxide, zinc oxide, cerium oxide, barium oxide, calcium carbonate, barium titanate, and barium sulfate, or a complex of two or more kinds.

The organic and inorganic complex may be one or more complex selected from polysiloxane in which an aliphatic or aromatic hydrocarbon group is comprised, a compound that is obtained by copolymerizing one or more acryl-based unsaturated compounds and polysiloxane, and a silicon-based compound having an epoxy group or an ethylene unsaturated bond.

The content of each resin in the coating composition is preferably the low refractive substance 1 to 70 parts by weight, the high refractive substance 20 to 95 parts by weight, the fluorine-based compound 0.1 to 50 parts by weight, and the particulates 0.01 to 70 parts by weight on the basis of 100 parts by weight of the entire coating composition. In addition, it is more preferable that the content is the low refractive substance 5 to 30 parts by weight, the high refractive substance 60 to 90 parts by weight, the fluorine-based compound 0.1 to 20 parts by weight, and the particulates 0.01 to 20 parts by weight on the basis of 100 parts by weight of the entire coating composition.

In the case where the low refractive substance is less than 1 part by weight to more than 70 parts by weight, the thickness of the low refractive layer is too thin or too thick to induce extinction interference. In the case where the high refractive substance is less than 20 parts by weight, it is difficult to form the low refractive layer, and in the case where the substance is more than 95 parts by weight, wear resistance is decreased.

In the case where the fluorine-based compound is more than 50 parts by weight, wear resistance becomes poor.

In the case where the particulates are less than 0.01 parts by weight, since the particulates are buried in the high refractive substance, an anti-glare effect is low, and in the case where the particulates are more than 70 parts by weight, an optical characteristic for display becomes largely poor.

The antireflective and antiglare coating composition according to the exemplary embodiment of the present invention may further comprise nanoparticulates having the average particle diameter of less than 1,000 nm, preferably 10 to 100 nm, and more preferably 30 to 50 nm. The nanoparticulates may act as anti-reflection low refractive nanoparticulates. As the nanoparticulates, there are metal fluoride, and organic and inorganic hollow and porous particulates. In detail, as metal fluoride, one or more substance selected from the group consisting of NaF, LiF, $AlF_3$, $Na_5Al_3F_{14}$, $Na_3AlF_6$, $MgF_2$, $NaMgF_3$, and $YF_3$ may be used. The nanoparticulates may be used within a range where a low reflective characteristic of the coating film, strength of the coating film and an attachment property with the display substrate are maintained. The content of the nanoparticulates may be 5 to 20 parts by weight on the basis of 100 parts by weight of

the antireflective and antiglare coating composition.

The exemplary embodiment of the present invention provides a method for manufacturing an antireflective and antiglare film using the antireflective and antiglare coating composition, and an antireflective and antiglare film manufactured using the same.

The method for manufacturing an antireflective and antiglare film according to the exemplary embodiment of the present invention comprises the steps of: a) preparing the antireflective and antiglare coating composition; b) forming a coating layer by applying the coating composition on a substrate; c) phase separating the low refractive substance and high refractive substance by drying the coating layer; and d) curing the dried coating layer.

In step b), as the substrate, glass, and plastic sheets and films may be used, and a thickness thereof is not limited. As the kind of the plastic film, there are a triacetate cellulose film, a norbomene-based cycloolefine polymer, a polyester film, a polymethaacrylate film, and a polycarbonate film.

The coating of the coating composition in step b) may be freely selected according to the kind of the substrate and fluid physical properties of the coating solution, such as bar coating, 2 or 3 roll reverse coating, gravure coating, die coating, microgravure coating, and comma coating.

The coating thickness may be 1 to 30 μm, and a dry process is performed for drying the solvent after the coating. In the case where a dry thickness of the coating substance is less than 1 μm, wear resistance is not sufficient, and in the case where the dry thickness is more than 30 μm, since the phase separation between the low refractive substance and the high refractive substance is not smooth, it is impossible to obtain desirable reflection results.

The drying in step c) may be performed at a temperature of 40 to 150°C for 0.1 to 30 min so that an organic solvent is volatilized in the coating composition and the low refractive substance is disposed a coat upper part, thus slowly being cured. In the case where the drying temperature is less than 40°C, since volatilization of the organic solvent is insufficient, the degree of curing may be decreased in UV curing, and in the case where the temperature is more than 150°C, the curing may be performed before the low refractive substance is not disposed on the upper part of the coating layer.

The curing in step d) may be performed by UV or heat according to the kind of the used resin. In the case where both the heat-curable resin and the UV-curable resin are used, after the UV curing is performed, the heat curing may be performed.

The UV curing may be performed by UV irradiation in an UV irradiation amount of 0.01 to 2 J/cm$^2$ for 1 to 600 sec. Accordingly, the coating layer may have sufficient wear resistance. In the case where the UV irradiation amount does not reach the above range, since the uncured resin remains on the coating layer, the surface thereof is sticky, wear resistance is not good, and in the case where the amount is more than the above range, since the degree of curing of the UV-curable resin becomes too high, the curing of the heat-curable resin may be hindered in the subsequently performed heat curing step.

The heat curing may be performed at a temperature of 20 to 200°C for 1 to 240 hours. In the case where the curing temperature is less than 20°C, since the heat curing speed is insignificant, a heat curing time may become too long, and in the case where the temperature is more than 200°C, there is a problem in that stability of the coating substrate is dangerous. The curing time is 1 to 240 hours according to the temperature, and the curing of the heat-curable resin may be sufficiently implemented in order to maximally increase scratch resistance of the coating layer.

The antireflective and antiglare film according to the exemplary embodiment of the present invention, which is manufactured by using the method for manufacturing the antireflective and antiglare coating composition and antireflective and antiglare film, comprises a substrate and a single coating layer disposed on the substrate and comprising a low refractive substance having a refractive index of 1.2 to 1.45, a high refractive substance having a refractive index of 1.46 to 2, a fluorine-based compound, and a particulates having an average particle diameter of 1 to 10 μm, in which a surface energy difference between the low refractive substance and the high refractive substance is 5 mN/m or more, and the low refractive substance and high refractive substance have a concentration gradient in a thickness direction. The single coating layer of the film according to the exemplary embodiment of the present invention has surface unevenness by the particulates.

In the antireflective and antiglare film, the low refractive substance comprised in a region corresponding to 50% in a thickness direction from a surface of the anti-reflection anti-glare layer contacting with air is preferably 70% or more, more preferably 85% or more, and more preferably 95% or more on the basis of the total weight of the low refractive substance. The antireflective and antiglare film according to the exemplary embodiment of the present invention has a reflection ratio of less than 3%, and an excellent antireflective and antiglare effect.

A hard coating layer may be further comprised on the antireflective and antiglare film according to the exemplary embodiment of the present invention, according to the usage purpose of the film.

The exemplary embodiment of the present invention provides a polarizing plate comprising the antireflective and antiglare film according to the exemplary embodiment of the present invention described above. In detail, the exemplary embodiment of the present invention provides a polarizing plate comprising a) a polarizing film, and b) an antireflective and antiglare film according to the exemplary embodiment of the present invention provided on at least

one side of the polarizing film. A protective film may be provided between the polarizing film and anti-reflection and the anti-glare film. In addition, as the protective film, a substrate for forming a single coating layer in manufacturing of the antireflective and antiglare film may be used as it is. The polarizing film and the antireflective and antiglare film may be laminated by an attachment agent. As the polarizing film, a matter that is known in the art may be used.

The exemplary embodiment of the present invention provides a display comprising the antireflective and antiglare film or the polarizing plate. The display device may be a liquid crystal display device or a plasma display device. The display device according to the exemplary embodiment of the present invention may have a structure that is known in the art, except that the antireflective and antiglare film according to the exemplary embodiment of the present invention is provided. For example, in the display device according to the exemplary embodiment of the present invention, the antireflective and antiglare film may be provided at an observer side or the outermost surface of a backlight side of the display panel. In addition, the display device according to the exemplary embodiment of the present invention may comprise a display panel, a polarizing film provided on at least one side of the panel, and an antireflective and antiglare film provided on a surface that is opposite to a surface contacting with the panel of the polarizing film.

[Mode for Invention]

A better understanding of the present invention may be obtained in light of the following preferred Examples.

**<Example>**

**<Example 1>**

A. Preparation of the low refractive heat-curable material comprising the alkoxysilane reactant

The solution of the low refractive heat-curable material was manufactured by sol-gel reacting the mixture of 25 parts by weight of fluoroalkylmethoxysilane, 20 parts by weight of tetraethoxysilane, 7 parts by weight of 3-methacryloxypropyl trimethoxy silane, 7.5 parts by weight of water, 0.5 parts by weight of nitric acid, 20 parts by weight of methanol and 20 parts by weight of 2-butyl alcohol was reacted at normal temperature for 24 hours.

B. Preparation of the high refractive UV-curable material

The solution of the high refractive UV-curable material was manufactured by uniformly mixing 30 parts by weight of dipentaerithritolhexaacrylate (DPHA) as a multifunctional acrylate for providing film strength of the coating film, 1 parts by weight of Darocur® 1173 as the UV initiator, 20 parts by weight of ethanol as the solvent, 29 parts by weight of n-butyl alcohol, and 20 parts by weight of acetylacetone (AcAc).

C. Preparation of the fluorine-based compound

As the fluorine-based compound, trifluoroethylacrylate was used.

(Manufacturing of the coating solution)

The compatible mixture solution was manufactured by uniformly mixing 20 parts by weight of the low refractive heat-curable solution, 75 parts by weight of the high refractive UV-curable solution, 4 parts by weight of trifluoroethylacrylate, and 1 parts by weight of silica (OK607, Manufactured by Degussa, Co., Ltd.) having the average particle diameter of 2 μm as the particulates.

(Manufacturing of the coating film)

The manufactured coating solution was coated on the triacetate cellulose film having the thickness of 80 μm by the wire bar (No. 5). This was dried in the oven at 120°C for 2 min, cured by UV with the UV energy of 200 mJ/cm$^2$, and left overnight in the oven at 120°C, thereby implementing the final heat curing. The thickness of the coating film was about 1 μm.

<**Example 2**>

D. Preparation of the low refractive UV-curable material

The solution of the low refractive UV-curable resin was manufactured by uniformly mixing 8 parts by weight of dipentaerythritolhexaacrylate (DPHA) as a multifunctional acrylate for providing film strength of the coating film, 30 parts by weight of 1H,1H,6H,6H-perfluoro-1,6-hexylacrylate as the fluorine-based acrylate for providing the low refractive index, 2 parts by weight of Darocur® 1173 as the photoinitiator, 20 parts by weight of diacetonealcohol (DAA) and 40 parts by weight of methylethylketone (MEK) as the solvent.

(Manufacturing of the coating solution)

The compatible mixture solution was manufactured by uniformly mixing 24 parts by weight of the low refractive UV-curable solution, 70 parts by weight of the high refractive UV-curable solution (B) manufactured in Example 1, 5 parts by weight of trifluoroethylacrylate as the fluorine-based compound, and 1 parts by weight of silica (OK607, Manufactured by Degussa, Co., Ltd.) having the average particle diameter of 2 μm as the particulates.

(Manufacturing of the coating film)

The coating film was manufactured in the same manner as Example 1.

**<Example 3>**

E. Preparation of the high refractive heat-curable material for manufacturing the urethane compound

The solution of the high refractive material was manufactured by uniformly mixing 12 parts by weight of isocyanate Vestanat® 1358 (Degussa, Co., Ltd.), 19.5 parts by weight of difunctional alcohol Terahtane® 650 (Aldrich, Co., Ltd.), 0.5 parts by weight of dibutyltin dilaurate as the metal catalyst, 28 parts by weight of diacetonealcohol (DAA) and 40 parts by weight of methanol (MeOH) as the solvent.

(Manufacturing of the coating solution)

The compatible mixture solution was manufactured by uniformly mixing 24 parts by weight of the low refractive heat-curable solution (A) manufactured in Example 1, 70 parts by weight of the high refractive heat-curable solution B, 5 parts by weight of trifluoroethylacrylate as the fluorine-based compound, and 1 parts by weight of silica (OK607, Manufactured by Degussa, Co., Ltd.) having the average particle diameter of 2 μm as the particulates.

(Manufacturing of the coating film)

The coating film was manufactured in the same manner as Example 1.

**<Example 4>**

(Manufacturing of the coating solution)

The compatible mixture solution was manufactured by uniformly mixing 21 parts by weight of the low refractive UV-curable solution (B) manufactured in Example 2, 70 parts by weight of the high refractive UV-curable solution (D) manufactured in Example 1, 8 parts by weight of tridecafluorooctyltriethoxysilane as the fluorine-based compound, and 1 parts by weight of silica (OK607, Manufactured by Degussa, Co., Ltd.) having the average particle diameter of 2 μm.

(Manufacturing of the coating film)

The coating film was manufactured in the same manner as Example 1.

<**Example 5>**

(Manufacturing of the coating solution)

The compatible mixture solution was manufactured by uniformly mixing 20 parts by weight of the low refractive UV-curable solution (B) to which 5 parts by weight of hollow silica having the average particle diameter of 30 nm was added, 71 parts by weight of the high refractive UV-curable solution (D) manufactured in Example 1, 8 parts by weight of tridecafluorooctyltriethoxysilane as the fluorine-based compound, and 1 parts by weight of silica (OK607, Manufactured by Degussa, Co., Ltd.) having the average particle diameter of 2 $\mu$m.

(Manufacturing of the coating film)

The coating film was manufactured in the same manner as Example 1.

**<Example 6>**

(Manufacturing of the coating solution)

The compatible mixture solution was manufactured by uniformly mixing 20 parts by weight of the low refractive UV-curable solution (B) manufactured in Example 2, 69 parts by weight of the high refractive UV-curable solution (D) manufactured in Example 1, 8 parts by weight of tridecafluorooctyltriethoxysilane as the fluorine-based compound, and 3 parts by weight of PMMA spherical particulates having the average particle diameter of 3 $\mu$m.

(Manufacturing of the coating film)

The coating film was manufactured in the same manner as Example 1.

**<Comparative Example 1>**

The coating film was manufactured in the same manner as Example 1, except that the low refractive heat-curable solution (A) was not used in the coating solution used in Example 1.

**<Comparative Example 2>**

The coating film was manufactured in the same manner as Example 1, except that the separate fluorine-based compound (C) was not used in the coating solution used in Example 1.

**<Comparative Example 3>**

The coating film was manufactured in the same manner as Example 1, except that the separate particulates was not used in the coating solution used in Example 1.

**<Comparative Example 4>**

F. Preparation of the low refractive heat-curable material comprising the alkoxysilane reactant

The solution of the low refractive heat-curable material was manufactured by sol-gel reacting the mixture of 5 parts by weight of fluoroalkylethoxysilane, 37 parts by weight of tetramethoxysilane, 10 parts by weight of vinyl trimethoxy silane, 7.5 parts by weight of water, 0.5 parts by weight of nitric acid, and 40 parts by weight of methanol was reacted at normal temperature for 24 hours.

G. Preparation of the high refractive UV-curable material

The solution of the low refractive UV-curable material was manufactured by uniformly mixing 20 parts by weight of pentaerythritoltri/tetraacrylate as multifunctional acrylate for providing film strength of the coating film, 10 parts by weight of trimethylenepropanetriacrylate, 1 parts by weight of Darocur® 1173 as the UV initiator, 5 parts by weight of BYK® 333 and 4 parts by weight of BYK® 371 as the surfactant, 20 parts by weight of ethanol , 20 parts by weight of n-butyl alcohol, and 40 parts by weight of methylethylketone (MEK) as the solvent.

(Manufacturing of the coating solution)

The compatible mixture solution was manufactured by uniformly mixing 24 parts by weight of the low refractive heat-curable solution, 70 parts by weight of the high refractive UV-curable solution, 5 parts by weight of trifluoroethylacrylate as the fluorine-based compound, and 1 parts by weight of silica (OK607, Manufactured by Degussa, Co., Ltd.) having the average particle diameter of 2 μm.

(Manufacturing of the coating film)

The coating film was manufactured in the same manner as Example 1.

**<Experimental Example>**

The refractive index and surface energy of the cured substance were measured by using the low refractive and high refractive materials A, B, D, E, F, and G manufactured in Examples 1, 2, and 3 and Comparative Example 4, and described in Table 1.

The manufacturing method of the cured substance of each material was the same as the following method. The heat-curable materials A, E, and F were coated by the wire bar (No. 5) on the triacetate cellulose film having the thickness of 80 μm, and left in the oven at 120°C for one day, and the UV-curable materials B, D, and G were coated by using the same method as the heat-curable material and cured by UV in UV energy of 200 $mJ/cm^2$ by drying the materials in the oven at 60°C for 2 min.

The refractive index was measured by using the prism coupler manufactured by Sairon Technology, Co., Ltd., and the surface energy was measured by using DSA100 that was the Drop shape analysis product manufactured by KRUSS, Co., Ltd. on the basis of water and diiodomethane ($CH_2I_2$).

[TABLE 1]

| | low refractive material | | | high refractive material | | |
|---|---|---|---|---|---|---|
| | A | D | F | B | E | G |
| Refractive index | 1.39 | 1.39 | 1.44 | 1.53 | 1.51 | 1.50 |
| Surface energy (mN/m) | 12 | 14 | 28 | 40 | 37 | 32 |

The thickness of the coating film manufactured by the method of the above Examples and Comparative Example was 1 μm,

The optical characteristic of the anti-reflection film manufactured by the above method was evaluated by the following method.

1) Evaluation of the reflection ratio

The low reflection characteristic was evaluated by the minimum reflection ratio value by black treating the rear side of the coating film and measuring the reflection ratio by the Solid Spec. 3700 spectrophotometer manufactured by Shimadzu, Co., Ltd.

2) Evaluation of the permeability and Haze

The permeability and Haze of the coating film were evaluated by using HR-100 manufactured by Nippon Murakami, Co., Ltd.

3) Evaluation of the gloss

The gloss of the coating film was evaluated by using the Micro-TRI-gloss Glossmeter manufactured by Nippon BYK, Co., Ltd.

The evaluation results of the reflection ratio, permeability, haze, and gloss are described in the following Table 2.

[TABLE 2]

| | Example | | | | | | Comparative Example | | | |
|---|---|---|---|---|---|---|---|---|---|---|
| | 1 (A+B) | 2 (B+D) | 3 (A+E) | 4 (B+D) | 5 (B+D) | 6 (B+D) | 1 | 2 | 3 | 4 |
| Reflection ratio (%) | 1.3 | 1.5 | 1.6 | 1.2 | 1 | 1.2 | 4.7 | 3.5 | 1.5 | 4.8 |
| Permeability (%) | 95.8 | 95.4 | 95.5 | 95.7 | 96 | 95.6 | 94.2 | 94.5 | 96.0 | 94.1 |
| Haze (%) | 4.6 | 5.3 | 5.2 | 5.0 | 4.9 | 1.5 | 4.9 | 5.0 | 0.3 | 5.2 |
| Gloss (%) | 62 | 65 | 64 | 61 | 58 | 63 | 75 | 73 | 80 | 78 |

As shown in Table 2, the film manufactured by using the antireflective and antiglare coating compositions of Examples according to the exemplary embodiment of the present invention had the lower reflection ratio and the higher permeability without a change of the haze and gloss as compared to the film manufactured by using the antireflective and antiglare coating compositions of Comparative Example, such that it was confirmed that an excellent antireflective and antiglare effect was implemented.

## Claims

**1.** An antireflective and antiglare coating composition, comprising:

a low refractive substance having a refractive index of 1.2 to 1.45;
a high refractive substance having a refractive index of 1.46 to 2;
a fluorine-based compound; and
particulates having an average particle diameter of 1 to 10 μm,
wherein a surface energy difference between the low refractive substance and the high refractive substance is 5 mN/m or more.

**2.** The antireflective and antiglare coating composition according to claim 1, wherein a surface energy of the low refractive substance is 25 mN/m or less.

**3.** The antireflective and antiglare coating composition according to claim 1, wherein the low refractive substance and high refractive substance each independently comprises a heat-curable resin or a UV-curable resin.

**4.** The antireflective and antiglare coating composition according to claim 1, wherein in respect to 100 parts by weight of the entire coating composition, a content of the high refractive substance is 20 to 95 parts by weight, and a content of the low refractive substance is 1 to 70 parts by weight.

**5.** The antireflective and antiglare coating composition according to claim 1, wherein in respect to 100 parts by weight of the entire coating composition, a content of the fluorine-based compound is 0.1 to 50 parts by weight, and a content of the particulates is 0.01 to 70 parts by weight.

**6.** The antireflective and antiglare coating composition according to claim 1, wherein the refractive index difference after curing between the high refractive substance and the low refractive substance is 0.01 or more.

**7.** The antireflective and antiglare coating composition according to claim 1, wherein the particulates are a fixed-type or amorphous particulates of organic, inorganic, or organic and inorganic complexes.

**8.** The antireflective and antiglare coating composition according to claim 1, wherein the average particle diameter of the particulates is 1.5 to 5μm.

**9.** The antireflective and antiglare coating composition according to claim 1, further comprising nanoparticulates having an average particle diameter of less than 1,000 nm.

**10.** A method for manufacturing an antireflective and antiglare film, comprising the steps of:

a) preparing an antireflective and antiglare coating composition according to any one of claims 1 to 9;
b) forming a coating layer by applying the coating composition on a substrate;
c) phase-separating the low refractive substance and high refractive substance by drying the coating layer; and
d) curing the dried coating layer.

**11.** The method for manufacturing an antireflective and antiglare film according to claim 10, wherein a coating thickness in step b) is 1 to 30 μm on the basis of dry coating.

**12.** An antireflective and antiglare film that is manufactured by using the antireflective and antiglare coating composition according to any one of claims 1 to 9, and comprises a single coating layer in which the low refractive substance and high refractive substance have a concentration gradient in a thickness direction.

**13.** The antireflective and antiglare film according to claim 12, wherein an unevenness is formed by the particulates on the surface of the antireflective and antiglare film.

**14.** The antireflective and antiglare film according to claim 12, wherein the low refractive substance that is comprised in an area corresponding to 50% in a thickness direction from a surface contacting with air of the single coating layer is 70% or more on the basis of a total weight of the low refractive substance.

**15.** The antireflective and antiglare film according to claim 12, wherein the reflection ratio is less than 3%.

**16.** A polarizing plate, comprising:

a) a polarizing film; and
b) an antireflective and antiglare film according to claim 12.

**17.** A display device, comprising:

the antireflective and antiglare film according to claim 12.

**Patentansprüche**

**1.** Antireflexions- und Blendschutzbeschichtungszusammensetzung, welche umfasst:

eine gering lichtbrechende Substanz mit einem Brechungsindex von 1,2 bis 1,45;
eine hoch lichtbrechende Substanz mit einem Brechungsindex von 1,46 bis 2;
eine Verbindung auf Fluorbasis; und
Partikel mit einem durchschnittlichen Teilchendurchmesser von 1 bis 10 μm,
wobei eine Oberflächenenergiedifferenz zwischen der gering lichtbrechenden Substanz und der hoch lichtbrechenden Substanz 5 mN/m oder höher ist.

**2.** Antireflexions- und Blendschutzbeschichtungszusammensetzung nach Anspruch 1, wobei eine Oberflächenenergie der gering lichtbrechenden Substanz 25 mN/m oder weniger ist.

**3.** Antireflexions- und Blendschutzbeschichtungszusammensetzung nach Anspruch 1, wobei die gering lichtbrechende Substanz und die hoch lichtbrechende Substanz jeweils unabhängig ein wärmehärtbares Harz oder ein UV-härtbares Harz umfassen.

**4.** Antireflexions- und Blendschutzbeschichtungszusammensetzung nach Anspruch 1, wobei in Bezug auf 100 Gewichtsteile der gesamten Beschichtungszusammensetzung ein Gehalt der hoch lichtbrechenden Substanz 20 bis 95 Gewichtsteile und ein Gehalt der gering lichtbrechenden Substanz 1 bis 70 Gewichtsteile ist.

**5.** Antireflexions- und Blendschutzbeschichtungszusammensetzung nach Anspruch 1, wobei in Bezug auf 100 Gewichtsteile der gesamten Beschichtungszusammensetzung ein Gehalt der Verbindung auf Fluorbasis 0,1 bis 50 Gewichtsteile und ein Gehalt der Partikel 0,01 bis 70 Gewichtsteile ist.

**6.** Antireflexions- und Blendschutzbeschichtungszusammensetzung nach Anspruch 1, wobei der Brechungsindexunterschied nach Härten zwischen der hoch lichtbrechenden Substanz und der gering lichtbrechenden Substanz 0,01 oder mehr ist.

**7.** Antireflexions- und Blendschutzbeschichtungszusammensetzung nach Anspruch 1, wobei die Partikel von einem festen Typ oder amorphe Partikel von organischen, anorganischen oder organischen und anorganischen Komplexen sind.

**8.** Antireflexions- und Blendschutzbeschichtungszusammensetzung nach Anspruch 1, wobei der durchschnittliche Teilchendurchmesser der Partikel 1,5 bis 5 μm ist.

**9.** Antireflexions- und Blendschutzbeschichtungszusammensetzung nach Anspruch 1, weiter umfassend Nanopartikel mit einem durchschnittlichen Teilchendurchmesser von weniger als 1.000 nm.

**10.** Verfahren zum Herstellen eines Antireflexions- und Blendschutzfilms, welches die Schritte umfasst:

a) Herstellen einer Antireflexions- und Blendschutzbeschichtungszusammensetzung nach einem der Ansprüche 1 bis 9;
b) Bilden einer Beschichtungsschicht durch Auftragen der Beschichtungszusammensetzung auf ein Substrat;
c) Phasentrennen der gering lichtbrechenden Substanz und der hoch lichtbrechenden Substanz durch Trocknen der Beschichtungsschicht; und
d) Härten der getrockneten Beschichtungsschicht.

**11.** Verfahren zum Herstellen eines Antireflexions- und Blendschutzfilms nach Anspruch 10, wobei eine Beschichtungsdicke in Schritt b) 1 bis 30 μm auf Basis der trockenen Beschichtung ist.

**12.** Antireflexions- und Blendschutzfilm, der hergestellt ist durch Verwendung der Antireflexions- und Blendschutzbeschichtungszusammensetzung nach einem der Ansprüche 1 bis 9, und welcher eine einzelne Beschichtungsschicht umfasst, in welcher die gering lichtbrechende Substanz und die hoch lichtbrechende Substanz einen Konzentrationsgradienten in einer Dickenrichtung aufweisen.

**13.** Antireflexions- und Blendschutzfilm nach Anspruch 12, wobei eine Unebenheit durch die Partikel auf der Oberfläche des Antireflexions- und Blendschutzfilms gebildet ist.

**14.** Antireflexions- und Blendschutzfilm nach Anspruch 12, wobei die gering lichtbrechende Substanz, die in einem Bereich entsprechend 50% in einer Dickenrichtung von einer Oberfläche in Kontakt mit Luft der einzelnen Beschichtungsschicht umfasst ist, 70% oder mehr auf der Basis eines Gesamtgewichts der gering lichtbrechenden Substanz ist.

**15.** Antireflexions- und Blendschutzfilm nach Anspruch 12, wobei das Reflexionsverhältnis weniger als 3% ist.

**16.** Polarisierende Platte, welche umfasst:

a) einen polarisierenden Film; und
b) einen Antireflexions- und Blendschutzfilm nach Anspruch 12.

**17.** Displayvorrichtung, welche umfasst:

den Antireflexions- und Blendschutzfilm nach Anspruch 12.

## Revendications

**1.** composition de revêtement antireflet et antiéblouissement comprenant :

une substance de faible réfringence ayant un indice de réfraction de 1,2 à 1,45 ;
une substance de forte réfringence ayant un indice de réfraction de 1,46 à2;
un composé à base de fluor ; et
des particules ayant un diamètre particulaire moyen de 1 à 10 μm,

dans laquelle une différence d'énergie de surface entre la substance de faible réfringence et la substance de forte réfringence est de 5 mN/m ou davantage.

**2.** Composition de revêtement antireflet et antiéblouissement selon la revendication 1, dans laquelle une énergie de surface de la substance de faible réfringence est de 25 mN/m ou inférieure.

**3.** Composition de revêtement antireflet et antiéblouissement selon la revendication 1, dans laquelle la substance de faible réfringence et la substance de forte réfringence comprennent chacune indépendamment une résine thermodurcissable ou une résine durcissable par UV.

**4.** Composition de revêtement antireflet et antiéblouissement selon la revendication 1, dans laquelle une teneur de la substance de forte réfringence est de 20 à 95 parties en poids et une teneur de la substance de faible réfringence est de 1 à 70 parties en poids par rapport à 100 parties en poids de la totalité de la composition de revêtement,

**5.** Composition de revêtement antireflet et antiéblouissement selon la revendication 1, dans laquelle une teneur du composé à base de fluor est de 0,1 à 50 parties en poids et une teneur des particules est de 0,01 à 70 parties en poids par rapport à 100 parties en poids de la totalité de la composition de revêtement.

**6.** Composition de revêtement antireflet et antiéblouissement selon la revendication 1, dans laquelle la différence d'indice de réfraction après le durcissement entre la substance de forte réfringence et la substance de faible réfringence est de 0,01 ou davantage.

**7.** Composition de revêtement antireflet et antiéblouissement selon la revendication 1, dans laquelle les particules sont de type fixe ou des particules amorphes de complexes organiques, inorganiques ou organiques et inorganiques.

**8.** Composition de revêtement antireflet et antiéblouissement selon la revendication 1, dans laquelle le diamètre particulaire moyen des particules est de 1,5 à 5 $\mu$m.

**9.** Composition de revêtement antireflet et antiéblouissement selon la revendication 1, comprenant en outre des nanoparticules ayant un diamètre particulaire moyen inférieur à 1.000 nm.

**10.** Procédé de fabrication d'une pellicule antireflet et antiéblouissement comprenant les étapes consistant à :

a) préparer une composition de revêtement antireflet et antiéblouissement selon l'une quelconque des revendications 1 à 9 ;
b) former une couche de revêtement en appliquant la composition de revêtement sur un substrat ;
c) séparer la phase de la substance de faible réfringence et de la substance de forte réfringence en séchant la couche de revêtement ; et
d) durcir la couche de revêtement séchée.

**11.** Procédé de fabrication d'une pellicule antireflet et antiéblouissement selon la revendication 10, dans laquelle une épaisseur du revêtement à l'étape b) est de 1 à 30 $\mu$m sur la base du revêtement sec.

**12.** Pellicule antireflet et antiéblouissement qui est fabriquée en utilisant la composition de revêtement antireflet et antiéblouissement selon l'une quelconque des revendications 1 à 9 et qui comprend une seule couche de revêtement dans laquelle la substance de faible réfringence et la substance de forte réfringence présentent un gradient de concentration dans une direction de l'épaisseur.

**13.** Pellicule antireflet et antiéblouissement selon la revendication 12, dans laquelle une inégalité de surface est formée par les particules sur la surface de la pellicule antireflet et antiéblouissement.

**14.** Pellicule antireflet et antiéblouissement selon la revendication 12, dans laquelle la substance de faible réfringence qui est comprise dans une zone correspondant à 50 % dans une direction de l'épaisseur d'une surface en contact avec l'air de la couche de revêtement unique est de 70 % ou davantage par rapport au poids total de la substance de faible réfringence.

**15.** Pellicule antireflet et antiéblouissement selon la revendication 12, dans laquelle le rapport de réfléchissement est inférieur à 3 %.

**16.** Plaque polarisante comprenant :

a) un film polarisant, et
b) une pellicule antireflet et antiéblouissement selon la revendication 12.

**17.** Dispositif d'affichage, comprenant :

la pellicule antireflet et antiéblouissement selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020100068042
- KR 102012007466 A
- JP H111999138712 B
- JP H021990234101 B
- JP H06199418704 B
- JP H071995168006 B
- JP 7325203 A
- WO 2009064127 A1
- WO 2009064128 A2
- KR 20090049519 A
- WO 20087082168 A1
- KR 20090049517 A
- KR 20090049558 A